# EUROPEAN PATENT SPECIFICATION

(11) **EP 1 933 627 B1**
(45) Date of publication and mention of the grant of the patent: **17.06.2009**
(21) Application number: 07747375.9
(22) Date of filing: 12.04.2007
(51) Int. Cl.: A21D 8/04, A21D 10/00, A21D 10/02

(54) **PROOFING TOLERANT YEAST-LEAVENED DOUGH**
GÄRSTABILER HEFETEIG& x9;
PÂTE LEVÉE AVEC DE LA LEVURE RÉSISTANTE À LA LEVÉE EXCESSIVE

(30) Priority: 12.04.2006 EP 06112567; 14.04.2006 EP 06112672
(43) Date of publication of application: 25.06.2008
(73) Proprietor: CSM Nederland B.V., 1112 XE Diemen (NL)
(72) Inventor: BRINKER, Eva-Maria, 48429 Rheine (DE); SCHMIDT, Kerstin, 28357 Bremen (DE)
(74) Representative: Swinkels, Bart Willem
(86) International application number: PCT/NL2007/050151
(87) International publication number: WO 2007/117145

(56) References cited:
- FR-A- 2 683 123
- JP-A- 58 158 180
- JP-A- 2005 073 622
- MCKINNON C M ET AL: "WINE YEAST PREFERMENT FOR ENHANCING BREAD AROMA AND FLAVOR" CEREAL CHEMISTRY, AACC INTERNATIONAL, ST PAUL, MN, US, vol. 73, no. 1, January 1996 (1996-01), pages 45-50, XP000554597 ISSN: 0009-0352 cited in the application

## Description

### TECHNICAL FIELD OF THE INVENTION

The present invention provides a yeast-leavened dough exhibiting improved proofing tolerance. More particularly, the present invention relates to a fully proofed dough that is stable against overproofing, i.e. that can be stored for up to several hours without the occurrence of dough collapse.

### BACKGROUND OF THE INVENTION

Traditionally, leavened dough is prepared by adding live yeast (baker's yeast) to the dough and by proofing the dough prior to baking. Proofing usually refers to a process by which pieces of yeast dough shaped to form bakery products are raised or enlarged preparatory to their being baked. Thus pastries, rolls, breads and other bakery products must undergo proofing before being put in an oven to be baked. When dough intermixed with live yeast is placed in a warm moist environment, carbon dioxide is internally generated throughout the body of the dough to create myriad gas pockets. These gas pockets enlarge or raise the dough and also alter its texture.

When the proofed dough is baked, the resultant product is lighter and less chewy than dough products which are not raised prior to baking. Thus croissants, doughnuts, pan pizzas, rolls and breads must be properly proofed before being baked. Proofing therefore is the process by which the shaped yeast dough pieces are subjected to a moist, hot-air environment to raise the pieces, and a proofing cabinet is a chamber in which proofing takes place.

The atmosphere in which proofing of yeast dough takes place within a cabinet needs to be controlled carefully to avoid underproofing or overproofing. Should the dough pieces receive excessive heat, they will rise too fast, thereby producing large gas pockets that cause the pieces to collapse during baking. On the other hand, insufficient heat results in dough pieces that are not fully raised, and when these pieces are baked they will have an undesirably dense structure. Excessive moisture in proofing causes the product to have a mushy surface, while insufficient moisture renders the surface of the baked product tough and rubbery.

Properly proofed yeast dough pieces must be handled with great care as they are very vulnerable. Fully proofed yeast dough will quickly collapse due to overproofing. Overproofing results from the continued activity of the live yeast, resulting in excessive carbon dioxide production and weakening of the dough structure. In order to avoid the occurrence of overproofing proofed yeast dough pieces have to be baked shortly after proofing or they have to be stored under refrigerated conditions until baking.

### SUMMARY OF THE INVENTION

The present inventors have unexpectedly discovered that overproofing of yeast-leavened doughs can be avoided by leavening dough using a strain of *Saccharomyces bayanus*. Surprisingly, unlike common baker's yeast (usually *S*. *cerevisiae*), the leavening action of *S*. *bayanus* was found to decrease substantially after the dough containing this yeast strain has undergone substantial leavening. The inventors have found that a fully proofed dough can be produced with the help of *S. bayanus* using standard proofing conditions, the only difference being that once the dough has been fully proofed, the leavening action effectively stops. Thus, dough collapse as a result of excess carbon dioxide production is avoided even if the fully proofed dough is kept in a proofing cabinet or under ambient conditions for several hours. As a result, there is no need for highly skilled personnel to determine the optimum stage of proof. Furthermore, the logistics of bakery operations become much more simple to manage as it is no longer necessary to bake proofed dough within minutes after it has reached the optimum stage of proof.

*S. bayanus* is one of the 10 yeast species mentioned in the classification of Barnett et al., "Yeasts: Characteristics and Identification", 3rd ed., (2000), Cambridge University Press, Cambridge, UK. Unlike S. cerevisiae, which is another yeast species, *S*. *bayanus* is not employed commercially in the production of yeast-leavened dough. *S. bayanus*, however, is widely used in wine production, especially in the production of champagne. It is noted that *S*. *bayanus* has sometimes been referred to a *S*. *cerevisiae ssp. bayanus*. Throughout this document *S*. *bayanus* and *S. cerevisiae ssp. bayanus.* are considered synonyms.

French patent application FR-A 2 683 123 describes a method of preparing yeast leavened bread using *S*. *bayanus*. No functional benefits associated with the use of this particular yeast species are reported.

McKinnon et al. (Cereal Chem. (1996), 73(1); 45-50) describe the results of a study in which thirteen commercial wine yeast strains, including 4 different *S*. *bayanus* strains, were compared for gas production and formation of volatile compounds different than baker's yeast. The authors conclude that wine yeast may be used to prepare a liquid preferment to enhance bread aroma and flavour.

### DETAILED DESCRIPTION OF THE INVENTION

Accordingly, the present invention relates to the use of *Saccharomyces bayanus* for enhancing the proofing tolerance of yeast-leavened dough.

The term "leavened dough" as used herein refers to dough that has undergone a leavening process resulting in the formation of gas filled pockets throughout the dough. Freshly leavened doughs are characterised by the presence of elevated carbon dioxide levels in the gas filled pockets. Typical examples of leavened dough include bread dough, pastry dough (including e.g croissant and Danish pastry dough) and doughnut dough. Cake batters and the like are not encompassed by the term leavened dough. The benefits of the present invention are particularly pronounced in the preparation of bread dough and fine pastry dough. Most preferably the present method is used to prepare a leavened bread dough, especially a non-laminated bread dough.

The advantages of the present invention are particularly apparent in case *S*. *bayanus* is employed in the preparation of a yeast-leavened dough that is fully proofed. The term "fully proofed" as used herein refers to a dough that has been leavened to maximum capacity under the proofing conditions employed. After reaching the "fully proofed" stage, there is generally a time window of not more than several minutes (depending on product, size, recipe) for the dough to be baked. Otherwise, dough collapse is inevitable. Dough collapse may be avoided by cooling or freezing the pre-proofed dough, but this usually needs to be done at around 2/3 of the proofing time needed to achieve a fully proofed dough.

The benefits of the present invention are especially pronounced in case a proofed dough of high specific volume is obtained. Typically, the yeast-leavened dough of the present invention has a specific volume of at least 1.4 ml/g. Preferably, the specific volume of the yeast-leavened dough is at least 2.0 ml/g, more preferably at least 3.0 ml/g, even more preferably at least 4.0 ml/g and most preferably at least 4.5 ml/g.

The inventors have achieved very good results with a *S*. *bayanus* strains exhibiting killer characteristics, i.e. strains that produce toxins that are fatal to other yeast strains. The phenomena of killer yeasts were discovered in 1965. Killer yeasts produce toxins as either proteins or glycoproteins, and these toxins are fatal to other yeast strains. Not all yeast strains are sensitive to killer toxins, and yeasts are currently classified as killer strains, sensitive strains, unaffected strains and competitive yeast strains. The sensitive yeast strains cannot survive when significant quantities of killer toxins are present in the must. The insensitive strains are affected by the presence of killer toxins. Competitive yeast strains are not killer strains, and they are insensitive to killer toxins. Toxicity is measured observing the inhibition of growth of one yeast strain in the presence of another strain. Research shows the killer toxins are more effective at pH values between 4 and 5. Several killer yeast strains are available commercially in active, dry form.

In a particularly preferred embodiment of the present invention, the *S*. *bayanus* strain employed is a killer yeast *S*. *cerevisiae* Killer (ssp. *bayanus*) deposited as IOC 18-2007 in the Collection de Levure d'Intérêt Biotechnologique and sold by Institut Oenologique de Champagne under the product code "IOC 18-2007". Hence, in a particularly preferred embodiment, the latter strain is employed to produce a yeast-leavened dough in accordance with the present invention.

According to another preferred embodiment, the *S*. *bayanus* strain employed is an *S*. *bayanus* strain deposited as IOC 11-1002 in the Collection de Levure d'Intérêt Biotechnologique. This particular strain is commercially available from the Institut Oenologique de Champagne, Epernay, France and is designated on the product sheet as *Saccharomyces cerevisiae* (anc. *Saccharomyces bayanus*). On the product sheet the strain is described as having a high resistance to alcohol (>15 vol.%). It is further characterised as having a high alcohol conversion (16.5 g/l of sugar produces 1% of alcohol).

A further aspect of the invention relates to a bakery composition containing viable cells of an *S*. *bayanus* strain selected from the group consisting of a killer yeast strain belonging to *S*. *bayanus*, an *S*. *bayanus* strain deposited as IOC 11-1002 in the Collection de Levure d'Intérêt Biotechnologique and combinations thereof, in combination with one or more bakery ingredients selected from the group consisting of flour, bakery enzymes, oxidoreductants, emulsifiers, acidulants, hydrocolloids and flavours. The bakery composition of the present invention may suitably be combined with flour, water and optionally other bakery ingredients to produce a dough which may be leavened by the action of the viable yeast contained in the bakery composition. Typically, the bakery composition contains at least 10⁶ cells, preferably at least 10⁷ cells and most preferably at least 10⁸ cells of the *S*. *bayanus* strain per gram.

In another preferred embodiment, the bakery composition comprises at least one of:
- more than 5 wt.% of emulsifier;
- more than 0.05 wt.% of enzyme preparation. e.g. containing α-amylase and/or xylanase;
- more than 0.01 wt.% of ascorbic acid.
The bakery composition according to the invention may take the form of a powder, a pourable liquid or a paste. Most preferably, the bakery composition is a free flowing powder with a volume weighted mean diameter in the range of 50-1000 µm.

Another aspect of the invention relates to a method of preparing a baked or fried product from leavened dough, said method comprising the successive steps of:
a. forming a dough by combining flour, water, yeast and optionally one or more other bakery ingredients, at least 10%, preferably at least 50% of the viable yeast cells in said yeast belonging to *S*. *bayanus*;
b. proofing the dough at a temperature in the range of 15-45 °C, typically at a relative humidity (RH) of at least 60%, to obtain a proofed dough with a specific volume of at least 1.4 ml/g; and
c. baking or frying the proofed dough;
wherein prior to baking or frying the proofed dough is stored for more than 30 minutes.

Ordinarily, proofing times employed in the present method are within the range of 30-120 minutes. Preferably, proofing time is within the range of 40-100 minutes, more preferably within the range of 60-90 minutes. In a particularly preferred embodiment, the dough is proofed at a temperature of at least 15 °C, more preferably of at least 28 °C, most preferably of a least 35 °C. Usually, proofing temperature does not exceed 45 °C. Proofing is typically carried out at a relative humidity of at least 70%, preferably of at least 75%.

The inventors have discovered that the proofed dough obtained in the present method is surprisingly stable, i.e. prior to baking or frying it can be stored for several hours under proofing or ambient conditions, without the risk of e.g. dough collapse. Also, the proofed dough does not need to be stored under refrigerated conditions if it cannot be baked or fried immediately. This advantages of the present method are particularly manifest if prior to baking or frying the proofed dough is kept for more than 30 minutes at a temperature of at least 15 °C, especially under ambient conditions (usually 20-25 °C). This may, for instance, occur in case of line breakdown or if baking and dough production takes place at different locations.

In a particularly preferred embodiment, the proofed dough is stored under ambient conditions for more than 1 hour, even more preferably for more than 2 hours, especially for more than 4 hours and most preferably for more than 6 hours prior to baking or frying. Typically, the proofed dough is stored under ambient conditions for not more than 24 hours, preferably for not more than 16 hours prior to baking or frying.

In one particular embodiment of the invention, the proofed dough is baked after it has been stored under ambient conditions, without said proofed dough having been stored or transported under refrigerated or freezing conditions. It is known that dough collapse of especially yeast leavened doughs may be prevented or postponed by refrigerating or freezing the proofed dough, provided refrigeration or freezing occurs well before the dough is fully proofed. The present proofed dough offers the advantage that it will remain stable without the need of employing refrigerated or freezing conditions, even if said dough has been fully proofed.

The stability of the proofed dough is not only manifest in the dough product obtained directly after proofing. Indeed, the present proofed dough may advantageously be stored and/or transported under refrigerated or freezing conditions, following which the proofed dough can suitably be stored under ambient conditions for at least 30 minutes prior to baking or frying. Also after frozen or refrigerated storage, the present dough retains its stability and does not suffer from e.g. dough collapse.

Accordingly, in a particularly preferred embodiment of the present method, prior to baking or frying, the proofed dough is successively packaged, frozen and stored frozen. It is noted that the dough need not be fully proofed prior to freezing. As a matter of fact, it is preferred to partially proof the dough prior to freezing. Prior to baking or frying, the frozen proofed dough is thawed and kept under ambient or proofing conditions for at least 30 minutes, more preferably for at least 1 hour and even more preferably for at least 2 hours. This particular embodiment of the invention offers the advantage that the proofed dough may be produced in a dedicated professional bakery, whereas the baked or fried product can be produced from the proofed dough in a different location with much less skilled personnel. Storage and/or transportation under refrigerated or freezing conditions offers the advantage that the time period between proofed dough manufacture and baking can be varied considerably. In addition, the stability of the proofed dough under ambient or proofing conditions offers the important additional advantage that even when the pre-proofed dough has been removed from the freezer or refrigerator, it will be stable for several more hours. Thus, following thawing of the frozen proofed dough, high quality, freshly baked products may be produced therefrom on demand for up to 8 hours or more after thawing.

In accordance with the present invention *S*. *bayanus* is advantageously incorporated in the dough in a concentration of at least 10⁵ cells per g of dough. Preferably, *S*. *bayanus* is incorporated in the dough in a concentration of 5x10⁵-10¹⁰, more preferably of 5x10⁶-5x10⁹ cells per g of dough.

The present invention encompasses the use of *S. bayanus* in combination with other leavening agents, e.g. baker's yeast or acid/base leavening systems. According to a particularly preferred embodiment at least 50%, preferably at least 70% and even more preferably at least 80% of the viable yeast cells contained in the yeast belong to *S*. *bayanus*. Most preferably, all of the viable yeast cells employed in the present method belong to *S*. *bayanus*. In another preferred embodiment, the present method does not employ an acid/base (or chemical) leavening system.

In another preferred embodiment of the invention, the dough is shaped prior to proofing. The term "shaping" refers to the manual or mechanical moulding of dough pieces into the desired shape. The term shaping also encompasses the action of filling tins with bread dough.

The present method offers the advantage that it can suitably employ a resting period of up to 30 minutes prior to the shaping of the dough. Indeed, in a preferred embodiment of the invention, the present method employs a resting period of between 1 and 30 minutes, preferably of between 2 and 20 minutes, prior to shaping.

Baked products of excellent quality can be obtained by the present method by baking the proofed dough in an oven that was previously preheated to a temperature of at least 160 °C, preferably of at least 200 °C. Likewise, excellent products can be obtained by (deep) frying the dough in a frying medium having a temperature of at least 150 °C.

In a preferred embodiment of the invention, the preparation of the leavened dough and the baking/frying operation are carried out in a different locations. The present invention offers the advantage that it enables the preparation of a storage stable dough that can be stored and transported under ambient conditions. Thus, in a particularly preferred embodiment, the method of the present invention comprises the steps of mixing, forming, shaping, proofing and packaging the dough in one location, followed by transporting the dough by means of a motorised vehicle (e.g. a truck) to another location where the dough is baked. Thus, the present invention makes it possible to prepare freshly baked products anywhere an oven is available and without the need of refrigerated/frozen storage or transportation.

The benefits of the present invention can be realised without the need of using a preferment. Thus, in a preferred embodiment of the present method dough preparation does not comprise the use of a preferment, in particular it does not comprise the use of liquid preferment..

Yet another aspect of the present invention relates to a proofed, partially proofed or non-proofed dough containing flour, water and at least 10⁵ cells/g, preferably at least 10⁶ cells/g, more preferably at least 10⁷ cells/g of an *S. bayanus* strain selected from the group consisting of a killer yeast strain belonging to *S*. *bayanuss*, a *S. bayanus* strain deposited as IOC 11-1002 in the Collection de Levure d'Intérêt Biotechnologique and combinations thereof, . Even more preferably, the killer yeast strain is a *S*. *bayanus* strain deposited as IOC 18-2007 in the Collection de Levure d'Intérêt Biotechnologique. The yeast-leavened dough typically has a specific volume of at least 1.4 ml/g, preferably of at least 2.0 ml/g. As explained herein before, such a yeast leavened dough offers the advantage of very good proofing tolerance.

The invention is further illustrated by means of the following examples.

### EXAMPLES

### Example 1

White tin breads were prepared on the basis of the following recipes:

| | **Recipe 1** | **Recipe 2** |
|---|---|---|
| Wheat flour | 4000 g | 4000 g |
| Water | 2400 g | 2520 g |
| Salt | 80 g | 80 g |
| Fat ¹ | 80 g | 80 g |
| Baking improver ² | 160 g | 160 g |
| Baker's yeast ³ | 120 g | |
| Dry yeast IOC 18-2007 ⁴ | - | 80 g |

| | | |
|---|---|---|
| ¹ Goldback® (Meistermarken, Germany) ² Olympial® (BIB Ulmer Spatz, Germany) ³ Backhefe^{™} (Uniferm, Germany) ⁴ A yeast strain ex Institut Oenologique de Champagne, Epernay, France; designated in the product sheet as *S. cerevisiae Killer* (anc. *bayanus*) | | |

The dough ingredients were admixed in Diosna^{™} SP 15 Spiral mixer and kneaded for 2 (slow) + 6 (fast) minutes (dough temperature after kneading appr. 24 °C). The dough was allowed to rest for 15 minutes before it was divided in pieces of about 250 grams and transferred into tins. Next the dough pieces were proofed at 35 °C and a relative humidity of 75% for 1-8 hours. After proofing, samples were immediately transferred into a pre-heated oven, but only after half of the dough samples received a minor cut in a longitudinal direction (to minimise crumb separation underneath the crust). The tins were transferred into a preheated oven and baked for 25 minutes at 215 °C using repeated steam injections (2.5 l).

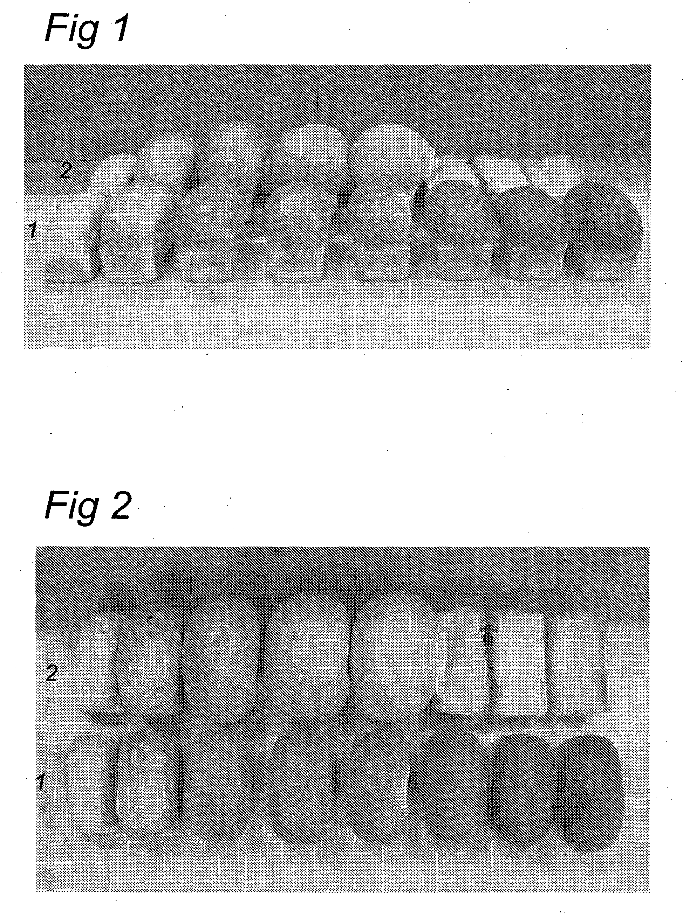

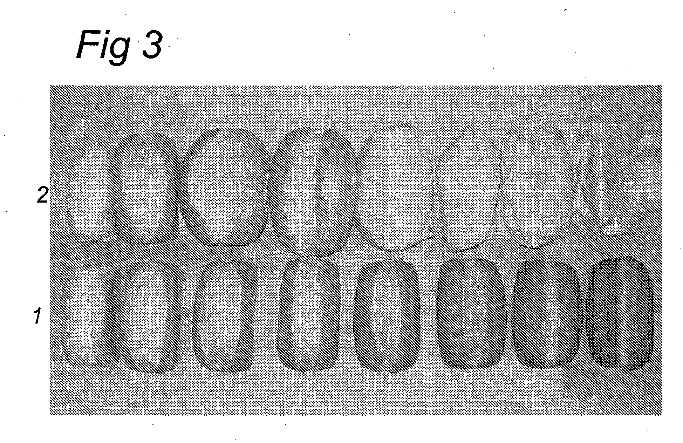

The results so obtained are depicted in figures 1, 2 and 3. In these photographs, the breads in the row marked "1" were leavened with the help of *S*. *bayanus* and the breads in the row marked "2" were leavened with ordinary baker's yeast. Figures 1 (frontal view) and 2 (top view) show breads that were not cut after proofing. Figure 3 (top view) shows breads that were cut after proofing.

The three photographs show that with both types of yeasts, after 2 hours of proofing, a well-leavened bread is obtained. Longer proofing of the dough containing baker's yeast resulted in severe overproofing and even total dough collapse after 6 hours. As evidenced by the photograph, the dough containing *S*. *bayanus* does not significantly increase in volume after 2 hours of proofing. Thus, with the help of this yeast strain, even after 8 hours of proofing, a good quality bread is still obtained.

### Example 2

Croissants were prepared on the basis of the following recipes:

| | **Recipe 1** | **Recipe 2** |
|---|---|---|
| Wheat flour | 2000 g | 2000 g |
| Water | 1260 g | 1240 g |
| Salt | 30 g | 30 g |
| Fat ¹ | 40 g | 40 g |
| Baking improver ² | 40 g | 40 g |
| Baker's yeast ³ | | 60 g |
| Dry yeast IOC 18-2007 ⁴ | 40 g | |
| Lamination margarine | 850 g | 850 g |

| | | |
|---|---|---|
| ¹ Goldback® (Meistermlarken, German) ² Olympial® (BIB Ulmer Spatz, Germany) ³ Backhefe^{™} (Uniferm, Germany) ⁴ A yeast strain ex Institut Oenologique de Champagne, Epernay, France; designated in the product sheet as *S. cerevisiae Killer* (anc. *bayanus*) | | |

The dough ingredients were admixed in Diosna^{™} SP 15 Spiral mixer and kneaded for 2 (slow) + 4 (fast) minutes (dough temperature after kneading appr. 20 °C). The dough was allowed to rest for 15 minutes before it was laminated using 3 simple turns. From the resulting sheet (150 cm x 42 cm x 3 mm) 10 x 21 cm triangles were cut, each weighing about 70 g. These trangles were formed into croissants.

Next the dough pieces were proofed at 35 °C and a relative humidity of 75% four 1, 2, 3, 4, 5 or 6 hours. After proofing, samples were immediately transferred into a pre-heated oven and baked for 16 minutes at 210 °C using repeated steam injections (1.5 l). The croissants so obtained were evaluated by an expert panel. The results obtained are depicted in the following table:

| Proofing time | Recipe 1 | Recipe 2 |
|---|---|---|
| 1 hour | Stable | Stable |
| 2 hours | Stable | Stable |
| 3 hours | Stable | Slightly weak |
| 4 hours | Stable | Slightly weak |
| 5 hours | Stable | Collapsed |
| 6 hours | Slightly weak | Collapsed |

### Example 3

White tin breads were prepared on the basis of the following recipes:

| | **1** | **2** | **3** |
|---|---|---|---|
| Wheat flour | 1000 g | 1000 g | 1000 g |
| Water (7.7 °C) | 620 g | 620 g | 620 g |
| Fat ¹ | 20 g | 20 g | 20 g |
| Salt | 15g | 15g | 15g |
| Baking improver ² | 20 g | 20 g | 20 g |
| *S. cerevisiae Killer* (anc. *bayanus*) ³ | 20 g | | |
| *S. cerevisiae* without killer factor ⁴ | | 20 g | |
| *S. cerevisiae* with killer factor⁵ | | | 20 g |

| | | | |
|---|---|---|---|
| ¹ Goldback® (Meistermarken, German) ² Olympial® (BIB Ulmer Spatz, Germany) ³ Dry yeast IOC 18-2007, ex Institut Oenologique de Champagne, Epernay, France ⁴ Dry yeast Enoferm M2, ex Danstar Ferment AG, Zug, Switzerland ⁵ Dry yeast Vin 13, ex Anchor Biotechnologies, Eppindust, South Africa | | | |

The dough ingredients were admixed in Diosna^{™} SP 15 Spiral mixer and kneaded for 2 (slow) + 6 (fast) minutes (dough temperature after kneading appr. 24-25 °C). The dough was allowed to rest for 15 minutes before it was divided in pieces of about 250 grams and transferred into tins. Next the dough pieces were proofed at 35 °C and a relative humidity of 75% for 1-6 hours. After proofing, samples were immediately transferred into a pre-heated oven and baked for 30 minutes at 215 °C using repeated steam injections (2.0 1).

The specific volume (SV) of the baked dough pieces was determined as well as the change of SV as a function of proofing time. This was done by determining the weight and the volume of the baked products. The following results were obtained:

| | **Recipe 1** | **Recipe 2** | **Recipe 3** |
|---|---|---|---|
| | **SV** | **SV** | **SV** |
| 1 hour | 6.2 ml/g | 3.3 ml/g | 3.3 ml/g |
| 2 hours | 6.7 ml/g | 4.7 ml/g | 4.6 ml/g |
| 3 hours | 6.7 ml/g | 5.6 ml/g | 6.1 ml/g |
| 4 hours | 7.0 ml/g | 5.9 ml/g | 7.1 ml/g |
| 5 hours | 6.7 ml/g | 4.9 ml/g | 6.2 ml/g |
| 6 hours | 6.3 ml/g | 3.7 ml/g | 6.6 ml/g |

These results show that it took around 4 hours to fully proof the doughs made according to recipes 2 and 3, these doughs started to collapse shortly after having been fully proofed. In contrast, the dough according to recipe 1 was already fully proofed after 1 hour and did not show signs of collapse until it had been proofed for 6 hours.

The results also show that both *S*. *cerevisae* with and without killer factor are not capable of delivering the proofing tolerance that is provided by a killer yeast strain belonging to *S*. *bayanus*

### Example 4

White tin breads were prepared on the basis of the following recipes:

| | **Recipe 1** | **Recipe 2** | **Recipe 3** |
|---|---|---|---|
| Wheat flour | 2000 g | 2000 g | 2000 g |
| Water | 1260 g | 1260 g | 1200 g |
| Salt | 40 g | 40 g | 40 g |
| Margarine ¹ | 40 g | 40 g | 40 g |
| Baking improver ² | 40 g | 40 g | 40 g |
| Dry yeast IOC 18-2007 ³ | 40 g | | |
| Dry yeast IOC 11-1002 ⁴ | | 40 g | |
| Baker's yeast ⁵ | | | 60 g |

| | | | |
|---|---|---|---|
| ¹ Goldback® (Meistermarken, German) ² Olympial Frost ® (BIB Ulmer Spatz, Germany) ³ A yeast strain ex Institut Oenologique de Champagne, Epernay, France; designated in the product sheet as *S. cerevisiae Killer-* (anc. *bayanus*) ⁴ A yeast strain ex Institut Oenologique de Champagne, Epernay, France; designated on the product sheet as *Saccharomyces cerevisiae* (anc. *Saccharomyces bayanus*) ⁵ Backhefe^{™} (Uniferm, Germany) | | | |

The dough ingredients were admixed in Diosna^{™} SP 15 Spiral mixer and kneaded for 2 (slow) + 6 (fast) minutes (dough temperature after kneading appr. 24 °C). The dough was allowed to rest for 15 minutes before it was divided in pieces of about 250 grams and transferred into tins. Next the dough pieces were proofed at 35 °C and a relative humidity of 75% for 1-6 hours. After proofing, samples were immediately transferred into a pre-heated oven after the dough samples had received a minor cut in a longitudinal direction (to minimise crumb separation underneath the crust). The tins were transferred into a preheated oven and baked for 30 minutes at 215 °C using repeated steam injections (2 l).

The specific volume (SV) of the baked dough pieces was determined as well as the change of SV as a function of proofing time. This was done by determining the weight and the volume of the baked products. The following results were obtained:

| | **Recipe 1** | **Recipe 2** | **Recipe 3** |
|---|---|---|---|
| | **SV** | **SV** | **SV** |
| 1 hour | 6.1 ml/g | 6.2 ml/g | 7.5 ml/g |
| 2 hours | 6.3 ml/g | 6.1 ml/g | 9.4 ml/g |
| 3 hours | 6.3 ml/g | 6.2 ml/g | 11.4 ml/g |
| 4 hours | 5.9 ml/g | 6.2 ml/g | 10.4 ml/g |
| 5 hours | 6.1 ml/g | 6.5 ml/g | 9.5 ml/g |
| 6 hours | 6.5 ml/g | 6.4 ml/g | 8.8 ml/g |

These results show that the dough pieces made according to recipe 3 were already overproofed after 1 hour and started collapsing after 3 hours. In contrast, both the dough pieces according to recipe 1 and recipe 2 were fully proofed after 1 hour, did not become overproofed and did not show signs of collapse even when proofed for up to 6 hours.

## Claims

1. Use of *Saccharomyces bayanus* for enhancing the proofing tolerance of yeast-leavened dough.

2. Use according to claim 1, wherein the yeast leavened dough is a fully proofed dough having a specific volume of at least 1.4 ml/g.

3. Use according to any one of the preceding claims, wherein a killer yeast strain of *S. bayanus* is used.

4. Use according to any one of the preceding claims, wherein a *S. bayanus* strain deposited as IOC 18-2007 in the Collection de Levure d'Intérêt Biotechnologique is employed.

5. Use according to any one of claims 1-3, wherein an *S*. *bayanus* strain deposited as IOC 11-1002 in the Collection de Levure d'Intérêt Biotechnologique is employed.

6. A bakery composition containing viable cells of an *S*. *bayanus* strain selected from the group consisting of a killer yeast strain belonging to *S*. *bayanus*, an S. *bayanus* strain deposited as IOC 11-1002 in the Collection de Levure d'Intérêt Biotechnologique and combinations thereof, in combination with one or more bakery ingredients selected from the group consisting of flour, bakery enzymes, oxidoreductants, emulsifiers, acidulants, hydrocolloids and flavours.

7. Bakery composition according to claim 6, comprising at least 10⁶ cells of the *S*. *bayanus* strain per gram.

8. Bakery composition according to claim 6 or 7, comprising at least one of:
- more than 5 wt.% of emulsifier;
- more than 0.05 wt.% of enzyme preparation;
- more than 0.01 wt.% of ascorbic acid.

9. A method of preparing a baked or fried product from leavened dough, said method comprising the successive steps of:
a. forming a dough by combining flour, water, yeast and optionally one or more other bakery ingredients, at least 10% of the viable yeast cells in said yeast belonging to *S*. *bayanus*;
b. proofing the dough at a temperature in the range of 15-45 °C to obtain a proofed dough with a specific volume of at least 1.4 ml/g; and
c. baking or frying the proofed dough;
wherein prior to baking or frying the proofed dough is stored for more than 30 minutes.

10. Method according to claim 9, wherein *S*. *bayanus* is incorporated in the dough in a concentration of at least 10⁵ cells per g of dough.

11. A dough containing flour, water and at least 10⁵ cells/g, preferably at least 10⁶ cells/g of an *S*. *bayanus* strain selected from the group consisting of a killer yeast strain belonging to *S*. *bayanus*, an *S*. *bayanus* strain deposited as IOC 11-1002 in the Collection de Levure d'Intérêt Biotechnologique and combinations thereof.

## Patentansprüche

1. Verwendung von *Saccharomyces bayanus* zur Erhöhung der Toleranz beim Gehenlassen von hefegetriebenem Teig.

2. Verwendung gemäß Anspruch 1, wobei der hefegetriebene Teig ein vollständig aufgegangener Teig mit einem spezifischen Volumen von wenigstens 1,4 ml/g ist.

3. Verwendung gemäß irgendeinem der vorhergehenden Ansprüche, wobei ein *S.-bayanus*-Killerhefestamm verwendet wird.

4. Verwendung gemäß irgendeinem der vorhergehenden Ansprüche, wobei ein *S.-bayanus*-Stamm verwendet wird, der als IOC 18-2007 bei der Collection de Levure d'Intérêt Biotechnologique hinterlegt ist.

5. Verwendung gemäß irgendeinem der Ansprüche 1 - 3, wobei ein *S.-bayanus-*Stamm verwendet wird, der als IOC 11-1002 bei der Collection de Levure d'Intérêt Biotechnologique hinterlegt ist.

6. Eine Backzusammensetzung, die wachstumsfähige Zellen eines *S.-bayanus-*Stammes, ausgewählt aus der Gruppe, bestehend aus einem Killerhefestamm, der zu *S*. *bayanus* gehört, einem *S.-bayanus*-Stamm, der als IOC 11-1002 bei der Collection de Levure d'Intérêt Biotechnologique hinterlegt ist, und Kombinationen davon, in Kombination mit einem oder mehreren Backzutaten, ausgewählt aus der Gruppe, bestehend aus Mehl, Backenzymen, Oxidoreduktantien, Emulgatoren, Säuerungsmitteln, Hydrokolloiden und Aromen, enthält.

7. Backzusammensetzung gemäß Anspruch 6, umfassend wenigstens 10⁶ Zellen des *S.-bayanus-Stammes* pro Gramm.

8. Backzusammensetzung gemäß Anspruch 6 oder 7, umfassend wenigstens eines von:
- mehr als 5 Gew.-% Emulgator,
- mehr als 0,05 Gew.-% Enzympräparat,
- mehr als 0,01 Gew.-% Ascorbinsäure.

9. Ein Verfahren zur Herstellung eines gebackenen oder gebratenen Produkts aus getriebenem Teig, wobei das Verfahren die aufeinanderfolgenden Schritte umfasst:
a. Bilden eines Teigs durch Kombinieren von Mehl, Wasser, Hefe und gegebenenfalls einem oder mehreren anderen Backzutaten, wobei wenigstens 10% der wachstumsfähigen Hefezellen in der Hefe zu *S. bayanus* gehören,
b. Gehenlassen des Teigs bei einer Temperatur im Bereich von 15-45°C, um einen aufgegangenen Teig mit einem spezifischen Volumen von wenigstens 1,4 ml/g zu erhalten, und
c. Backen oder Braten des aufgegangenen Teigs,
wobei vor dem Backen oder Braten der aufgegangene Teig mehr als 30 Minuten gelagert wird.

10. Verfahren gemäß Anspruch 9, wobei *S*. *bayanus* in einer Konzentration von wenigstens 10⁵ Zellen pro g Teig in den Teig eingearbeitet wird.

11. Ein Teig, enthaltend Mehl, Wasser und wenigstens 10⁵ Zellen/g, vorzugsweise wenigstens 10⁶ Zellen/g, eines *S.-bayanus*-Stammes, ausgewählt aus der Gruppe, bestehend aus einem Killerhefestamm, der zu *S*. *bayanus* gehört, einem *S.-bayanus*-Stamm, der als IOC 11-1002 bei der Collection de Levure d'Intérêt Biotechnologique hinterlegt ist, und Kombinationen davon.

## Revendications

1. Utilisation de *Saccharomyces bayanus* pour augmenter la tolérance à la fermentation d'une pâte levée à la levure.

2. Utilisation selon la revendication 1, où la pâte levée à la levure est une pâte complètement fermentée ayant un volume spécifique d'au moins 1,4 ml/g.

3. Utilisation selon l'une quelconque des revendications précédentes, où une souche de levure "killer" de *S*. *bayanus* est utilisée.

4. Utilisation selon l'une quelconque des revendications précédentes, où une souche de *S. bayanus* déposée sous le N° IOC 18-2007 dans la Collection de Levure d'Intérêt Biotechnologique est employée.

5. Utilisation selon l'une quelconque des revendications 1-3, où une souche de *S. bayanus* déposée sous le N° IOC 11-1002 dans la Collection de Levure d'Intérêt Biotechnologique est employée.

6. Composition de boulangerie contenant des cellules viables d'une souche de *S*. *bayanus* choisie dans le groupe constitué par une souche de levure "killer" appartenant à *S*. *bayanus*, une souche de *S*. *bayanus* déposée sous le N° IOC 11-1002 dans la Collection de Levure d'Intérêt Biotechnologique et leurs combinaisons, en combinaison avec un ou plusieurs ingrédients de boulangerie choisis dans le groupe constitué par la farine, les enzymes de boulangerie, les agents d'oxydoréduction, les émulsifiants, les agent acidifiants, les hydrocolloïdes et les arômes.

7. Composition de boulangerie selon la revendication 6, comprenant au moins 10⁶ cellules de la souche de *S*. *bayanus* par gramme.

8. Composition de boulangerie selon la revendication 6 ou 7, comprenant l'un au moins parmi:
- plus de 5% en poids d'émulsifiant;
- plus de 0,05 % en poids de préparation enzymatique;
- plus de 0,01 % en poids d'acide ascorbique.

9. Procédé de préparation d'un produit cuit au four ou frit à partir de pâte levée, ledit procédé comprenant les étapes successives de:
a. formation d'une pâte en combinant de la farine, de l'eau, de la levure et éventuellement un ou plusieurs autres ingrédients de boulangerie, au moins 10% des cellules de levure viables dans ladite levure appartenant à *S*. *bayanus*;
b. fermentation de la pâte à une température comprise dans l'intervalle de 15-45°C pour obtenir une pâte fermentée ayant un volume spécifique d'au moins 1,4 ml/g; et
c. cuisson au four ou friture de la pâte fermentée;
où avant la cuisson au four ou la friture, la pâte fermentée est stockée pendant plus de 30 minutes.

10. Procédé selon la revendication 9, dans lequel *S*. *bayanus* est incorporé dans la pâte à une concentration d'au moins 10⁵ cellules par g de pâte.

11. Pâte contenant de la farine, de l'eau et au moins 10⁵ cellules/g, de préférence, au moins 10⁶ cellules/g, d'une souche de *S*. *bayanus* choisie dans le groupe constitué par une souche de levure "killer" appartenant à *S*. *bayanus*, une souche de *S*. *bayanus* déposée sous le N° IOC 11-1002 dans la Collection de Levure d'Intérêt Biotechnologique, et leurs combinaisons.
